# EUROPÄISCHE PATENTANMELDUNG

(11) **EP 4 492 308 A1**
(43) Veröffentlichungstag der Anmeldung: **15.01.2025**
(21) Anmeldenummer: 24181304.7
(22) Anmeldetag: 11.06.2024
(51) Int. Cl.: G06Q 10/087, B65G 1/137, G03B 17/54, G06F 3/042

(54) **VORRICHTUNG MIT EINER KAMERAANORDNUNG**

(30) Priorität: 13.07.2023 DE 102023118599
(71) Anmelder: SICK AG, 79183 Waldkirch (DE)
(72) Erfinder: Schütz, Frank, 79365 Rheinhausen (DE); Weber, Christopher, 77960 Seelbach (DE)
(74) Vertreter: Manitz Finsterwald Patent- und Rechtsanwaltspartnerschaft mbB

(57) **Zusammenfassung**

Die Erfindung betrifft eine Vorrichtung für ein Logistikzentrum, insbesondere ein Industriewarenlager, mit einer Kameraanordnung zur Erfassung einer auf einer Ablagefläche abgelegten Vielzahl von Waren innerhalb des gesamten Sichtfelds der Kameraanordnung, einer Projektionseinrichtung zur Projektion von die Erfassung betreffenden Informationen, und einer elektronischen Steuereinrichtung, die mit der Kameraanordnung und der Projektionseinrichtung in Signalverbindung steht und dazu ausgebildet ist, mittels Bildanalyse die Waren einzeln zu erfassen, und die Erfassung eines Aufnehmens einer jeweiligen Ware von der Ablagefläche und/oder eines Ablegens einer jeweiligen Ware auf die Ablagefläche durch eine Projektion optisch erkennbar darzustellen.

## Beschreibung

Die Erfindung betrifft eine Vorrichtung für ein Logistikzentrum, insbesondere ein Industriewarenlager, mit einer Kameraanordnung zur Erfassung einer auf einer Ablagefläche abgelegten Vielzahl von Waren innerhalb des gesamten Sichtfelds der Kameraanordnung.

Beispielsweise in Logistikzentren kommen zur Erfassung abzufertigender Waren häufig Handscanner zum Einsatz. Wird eine Ware an einen anderen Ort bewegt, wird die Ware üblicherweise mittels eines Handscanners registriert. Dadurch kann zum Beispiel ein Aufnehmen einer Ware aus einem Regal oder ein Ablegen einer Ware in ein Regal von einer Lagerhaltungssoftware erfasst werden, wodurch eine elektronische Nachverfolgung zur Bestimmung eines momentanen Aufenthaltsortes der Ware ermöglicht wird. Ein derartiges Vorgehen erfordert jedoch viele Handscanner und zahlreiche der besagten Registriervorgänge. Zudem kann bei den bekannten Anwendungen eine Person, welche die Ware bewegt, nicht ohne Weiteres erkennen, ob das Aufnehmen oder das Ablegen auch tatsächlich korrekt erfasst wurde.

Der Erfindung liegt daher die Aufgabe zugrunde, eine Vorrichtung zu schaffen, welche eine vereinfachte Erfassung von Waren und dabei zugleich eine Erhöhung der Zuverlässigkeit ermöglicht.

Diese Aufgabe wird durch eine Vorrichtung mit den Merkmalen des Anspruchs 1 gelöst, und insbesondere dadurch, dass die Vorrichtung eine Projektionseinrichtung zur Projektion von die Erfassung betreffenden Informationen und eine elektronische Steuereinrichtung umfasst, welche mit der Kameraanordnung und der Projektionseinrichtung in Signalverbindung steht. Die elektronische Steuereinrichtung ist dazu ausgebildet, mittels Bildanalyse die Waren einzeln zu erfassen, und die Erfassung eines Aufnehmens einer jeweiligen Ware von der Ablagefläche und/oder eines Ablegens einer jeweiligen Ware auf die Ablagefläche durch eine Projektion optisch erkennbar darzustellen.

Die Ablagefläche kann die zur Ablage geeigneten Flächen beispielsweise eines oder mehrerer Tische und/oder eines oder mehrerer Regale (z.B. mehrere Regalbretter, bevorzugt auf unterschiedlichen Ebenen) umfassen. Die Kameraanordnung umfasst mehrere einzelne Kameras, und ist derart ausgebildet, dass das gesamte Sichtfeld der Kameraanordnung den je nach Anwendungsfall gewünschten Bereich und die Waren darin abdeckt. In einer einfachsten Ausführung wäre grundsätzlich auch lediglich eine Kamera denkbar, wobei die Vorrichtung bereits zur Erfassung lediglich einer Ware zumindest zwei oder drei Kameras umfassen sollte. Durch den Einsatz mehrerer Kameras können mehrere unabhängige Sensordaten zur Erfassung herangezogen werden, wodurch die erfindungsgemäße Vorrichtung eine Erhöhung der Zuverlässigkeit bei der Erfassung ermöglicht. Da die Ware nicht mehr mit einem Handscanner registriert werden muss, sondern das Aufnehmen und/oder das Ablegen automatisch mittels der Kameraanordnung erfasst wird, wird durch die erfindungsgemäße Vorrichtung auch eine Vereinfachung der Erfassung ermöglicht. Vorteilhafterweise können die beispielsweise in einem Logistikzentrum aus Sicherheitsgründen üblicherweise ohnehin vorhandenen zahlreichen Kameras einen Teil der Kameraanordnung darstellen oder diese bilden. Da dann keine oder lediglich wenige zusätzliche Kameras installiert werden müssen, kann der Aufbau der Vorrichtung und damit die Erfassung weiter vereinfacht werden.

Mit Hilfe der Kameraanordnung werden die Waren von der elektronischen Steuereinrichtung einzeln erfasst. Die Erfassung des Aufnehmens der jeweiligen Ware von der Ablagefläche und/oder des Ablegens der jeweiligen Ware auf die Ablagefläche wird durch die Projektion optisch erkennbar dargestellt. Es versteht sich, dass sich die Projektion für die Erfassung des Aufnehmens und des Ablegens zweckmäßigerweise unterscheiden kann. Durch die Projektion kann eine Person, welche die Ware bewegt, unmittelbar optisch erkennen, ob das Aufnehmen und/oder das Ablegen auch tatsächlich korrekt von der Vorrichtung erfasst wurde. Wird beispielsweise eine Ware auf die Ablagefläche abgelegt und keine entsprechende Projektion dargestellt, ist unmittelbar erkennbar, dass das Ablegen von der Vorrichtung fehlerhafterweise nicht erfasst wurde. Die fehlerhafte Erfassung ist somit sofort erkennbar und es können sogleich Gegenmaßnahmen eingeleitet werden. Über die Projektionseinrichtung und die Kameraanordnung wird also letztlich eine Interaktion zwischen der Person und der Vorrichtung ermöglicht, wodurch die Zuverlässigkeit der Vorrichtung erhöht werden kann.

Vorteilhafte Ausgestaltungen der Erfindung ergeben sich aus den Unteransprüchen, der Beschreibung und den Figuren.

Es kann vorgesehen sein, dass die Projektionseinrichtung, beispielsweise durch deren Ausrichtung, und/oder die elektronische Steuereinrichtung dazu ausgebildet ist, die Projektion auf einer für die Projektion zugänglichen Oberfläche innerhalb des gesamten Sichtfelds der Kameraanordnung darzustellen. Dadurch kann die Projektion auf einfache Weise zuverlässig innerhalb des gesamten Sichtfelds der Kameraanordnung dargestellt werden. Für die Projektion zugänglich ist grundsätzlich jede Oberfläche, bei welcher sich entlang einer Verbindungslinie zwischen der Oberfläche und der Projektionseinrichtung nichts befindet, das die Darstellung der Projektion auf der Oberfläche hindern würde. Die Projektionseinrichtung und/oder die elektronische Steuereinrichtung kann auch dazu ausgebildet sein, die Projektion auf einem Hinweisschild oder einem Preisschild einer Ware, insbesondere der jeweiligen aufgenommenen und/oder abgelegten Ware, innerhalb des gesamten Sichtfelds der Kameraanordnung darzustellen. Derartige Schilder befinden sich in der Regel an gut einsehbaren Orten, wie beispielsweise an einer sichtbaren Kante eines Regals unterhalb der jeweiligen Ware. Die Darstellung der Projektion auf einem solchen Schild befindet sich folglich im direkten Blickfeld beim Aufnehmen und/oder Ablegen der Ware, wodurch auf einfache Weise zuverlässig erkannt werden kann, ob das Aufnehmen und/oder Ablegen korrekt oder fehlerhaft erfasst wurde. Wird die aufgenommene Ware nicht dort abgelegt, wo sie aufgenommen wurde, sondern zu einer anderen Ware auf der Ablagefläche abgelegt, kann die Projektion beispielsweise auf dem Schild der anderen Ware erfolgen. Dadurch kann auch für einen derartigen Fall auf einfache Weise zuverlässig erkannt werden, ob das Ablegen korrekt oder fehlerhaft erfasst wurde. Alternativ oder zusätzlich kann die Projektion direkt auf der jeweiligen Ware erfolgen. Auch hierbei befindet sich die Darstellung der Projektion im direkten Blickfeld beim Aufnehmen und/oder Ablegen der Ware, wodurch auf einfache Weise zuverlässig erkannt werden kann, ob das Aufnehmen und/oder Ablegen korrekt oder fehlerhaft erfasst wurde.

Vorzugsweise umfasst die Projektion ein Bild, ein Zeichen, ein Symbol und/oder eine Warenbezeichnung. Beispielsweise kann die Erfassung des Aufnehmens durch die Projektion eines ersten Zeichens, z.B. eines Plus-Zeichens, und/oder die Erfassung des Ablegens durch die Projektion eines zweiten Zeichens, z.B. eines Minus-Zeichens, dargestellt werden oder umgekehrt. Dadurch kann mit der Projektion die Erfassung des Aufnehmens und/oder des Ablegens auf einfache intuitive Weise und zuverlässig erkennbar dargestellt werden. Alternativ oder zusätzlich kann die Projektion auch farbcodiert sein. Beispielsweise kann die Erfassung des Aufnehmens der Ware durch die Projektion der Warenbezeichnung in grüner Farbe dargestellt werden. Die Erfassung des Ablegens kann durch die Projektion der Warenbezeichnung in roter Farbe dargestellt werden. Folglich kann durch die Farbcodierung einerseits zuverlässig erkannt werden, ob das Aufnehmen bzw. das Ablegen korrekt erfasst wurde. Mittels der dargestellten Warenbezeichnung kann zudem zuverlässig erkannt werden, ob auch das Ablegen der tatsächlich abgelegten Ware korrekt erfasst wurde oder ob fehlerhafterweise das Ablegen einer anderen Ware erfasst wurde. Dies ist insbesondere von Vorteil, wenn beispielsweise die aufgenommene Ware nicht dort abgelegt wird, wo sie aufgenommen wurde, sondern zu einer anderen Ware auf der Ablagefläche abgelegt wird. Somit kann auch durch die jeweilige Darstellung der Projektion die Erfassung des Aufnehmens und/oder des Ablegens auf einfache intuitive Weise und zuverlässig erkennbar dargestellt werden.

Bevorzugt kann die elektronische Steuereinrichtung dazu ausgebildet sein, die Projektion für eine vordefinierte Zeitdauer darzustellen. Die Zeitdauer ist dabei so vordefiniert, dass innerhalb dieser die Projektion erkannt werden kann. Hierdurch kann die Projektion zuverlässig erkannt werden. Beispielsweise kann die Zeitdauer 3 oder 10 Sekunden betragen.

Ferner kann die Projektionseinrichtung als ein Laserprojektor und/oder als ein Videoprojektor ausgeführt sein. Die Projektion mittels des Laserprojektors ist grundsätzlich auch bei ungünstigen Verhältnissen (beispielsweise bei Schmutzablagerungen auf der Projektionsfläche) und auf nahezu allen Oberflächen (d.h. unabhängig insbesondere vom Oberflächenmaterial, der Oberflächenstruktur und dem Reflexionsverhalten der Oberfläche) deutlich erkennbar (vorausgesetzt, die Oberfläche ist für die Projektion zugänglich). Darüber hinaus kann die Projektion mittels des Laserprojektors auch auf weit entfernten zugänglichen Oberflächen deutlich erkennbar dargestellt werden. Mittels des Videoprojektors kann die Projektion auf einfache Weise in verschiedenen Farben dargestellt werden. Die Projektionseinrichtung kann aber auch mehrere Laserprojektoren und/oder Videoprojektoren umfassen. Hierdurch können, insbesondere durch entsprechende Anordnung der mehreren Laserprojektoren und/oder Videoprojektoren, weitere für die Projektion zugängliche Oberflächen erhalten werden. Auch durch den Einsatz mehrerer Laserprojektoren kann die Projektion in verschiedenen Farben dargestellt werden.

Vorteilhafterweise weist die Vorrichtung eine an der Ablagefläche angeordnete Kraftsensoranordnung auf, mit welcher Kraftsensoranordnung die elektronische Steuereinrichtung in Signalverbindung steht. Alternativ oder zusätzlich kann die Vorrichtung auch ein RFID-Lesegerät umfassen, mit welchem RFID-Lesegerät die elektronische Steuereinrichtung in Signalverbindung steht. Die elektronische Steuereinrichtung kann dazu ausgebildet sein, auch mittels der Kraftsensoranordnung und/oder des RFID-Lesegeräts das Aufnehmen der jeweiligen Ware von der Ablagefläche und/oder das Ablegen der jeweiligen Ware auf die Ablagefläche zu erfassen. Da hierdurch mehrere unabhängige Sensordaten zur Erfassung herangezogen werden können, kann die Zuverlässigkeit der Vorrichtung bei der Erfassung weiter erhöht werden. Im Falle des RFID-Lesegeräts müssen die Waren mit entsprechenden RFID-Transpondern versehen sein, welche von dem RFID-Lesegerät gelesen werden können. Insbesondere zur Diebstahlsicherung sind Waren üblicherweise ohnehin mit RFID-Transpondern versehen. Diese RFID-Transponder können mit Vorteil zur beschriebenen Erfassung des Aufnehmens der jeweiligen Ware von der Ablagefläche und/oder des Ablegens der jeweiligen Ware auf die Ablagefläche genutzt werden, wodurch die Erfassung weiter vereinfacht werden kann.

Bevorzugt ist die Vorrichtung als stationär angeordnete Vorrichtung ausgebildet, d. h. beispielsweise an einer Gebäudedecke eines Logistikzentrums fest installiert. Alternativ oder zusätzlich kann die Projektionseinrichtung an einer Kamera der Kameraanordnung angeordnet sein, insbesondere als eine Einheit mit der Kamera ausgebildet sein. Falls die Projektionseinrichtung mehrere Laserprojektoren und/oder Videoprojektoren umfasst, können diese beispielsweise jeweils an einer jeweiligen Kamera der Kameraanordnung angeordnet sein, insbesondere als eine jeweilige Einheit mit der jeweiligen Kamera ausgebildet sein. Hierdurch kann der Installationsaufwand der Vorrichtung reduziert werden, wodurch der Aufbau der Vorrichtung und damit die Erfassung weiter vereinfacht werden kann.

Insbesondere kann die elektronische Steuereinrichtung dazu ausgebildet sein, mittels der Projektionseinrichtung durch eine Projektion eine Navigation entlang eines Weges zu einer jeweiligen Ware optisch erkennbar darzustellen. Hierzu kann die elektronische Steuereinrichtung einen Signaleingang aufweisen und dazu ausgebildet sein, über den Signaleingang eine Information über die jeweilige Ware, zu welcher die Navigation erfolgen soll, zu erhalten. Beispielweise kann eine Person mittels einer Anwendung auf einem mobilen Endgerät eine Ware, welche die Person aufsuchen möchte, auswählen. Die Information über die ausgewählte Ware kann die elektronische Steuereinrichtung über den Signaleingang erhalten. Ferner kann die elektronische Steuereinrichtung dazu ausgebildet sein, auf Informationen zuzugreifen, welche die jeweiligen Ablageorte der innerhalb des gesamten Sichtfelds vorhandenen Waren betreffen. Diese Informationen können beispielsweise durch die elektronischen Steuereinrichtung von einer externen Datenbank abgerufen werden. Außerdem kann die elektronischen Steuereinrichtung dazu ausgebildet sein, die Person, welche die Ware ausgewählt hat und zu dieser navigiert werden möchte, mittels der Kameraanordnung zu erkennen und damit den momentanen Standort der Person zu erkennen. Zusätzlich kann die elektronischen Steuereinrichtung dazu ausgebildet sein, beispielsweise über eine GPS-Ortungsfunktion des mobilen Endgeräts dessen momentanen Standort und damit den Standort der Person zu erkennen. Mittels der Projektionseinrichtung kann die elektronische Steuereinrichtung durch die Projektion, beispielsweise von einem oder mehrerer Pfeile, die Person entlang eines Weges zu der ausgewählten Ware navigieren. Dabei kann die elektronische Steuereinrichtung dazu ausgebildet sein, die Projektion über einen kontinuierlichen Abgleich des erkannten momentanen Standorts mit dem Ablageort der Ware zu aktualisieren. Die elektronische Steuereinrichtung kann ferner dazu ausgebildet sein, die ausgewählte Ware mittels der Projektionseinrichtung optisch erkennbar hervorzuheben, wenn als momentaner Standort ein Standort vor der gesuchten Ware erkannt wird, d.h. wenn die Person den Ablageort der gesuchten Ware erreicht hat. Die Hervorhebung kann beispielsweise durch eine Projektion in Form eines auf die ausgewählte Ware zeigenden Pfeils oder eines diese umgebenden Kreises erfolgen. Mittels der beschriebenen Navigation durch Projektion ermöglicht die Vorrichtung ein einfacheres und schnelleres Auffinden der jeweiligen Ware. Es versteht sich, dass diese Ausführungen auch für sich als eine eigenständige Erfindung betrachtet werden können.

Die vorliegende Erfindung betrifft gemäß einem weiteren Aspekt auch eine Vorrichtung für ein Logistikzentrum, insbesondere ein Industriewarenlager, mit einer Kameraanordnung zur Erkennung einer Person innerhalb des gesamten Sichtfelds der Kameraanordnung, einer Projektionseinrichtung zur Projektion von die Erkennung betreffenden Informationen, und einer elektronischen Steuereinrichtung, die mit der Kameraanordnung und der Projektionseinrichtung in Signalverbindung steht. Die elektronische Steuereinrichtung ist dazu ausgebildet, mittels Bildanalyse die Person zu erkennen, und durch eine Projektion eine Navigation entlang eines Weges zu einer jeweiligen Ware einer auf einer Ablagefläche abgelegten Vielzahl von Waren innerhalb des gesamten Sichtfelds der Kameraanordnung optisch erkennbar darzustellen. Die elektronische Steuereinrichtung weist einen Signaleingang auf und ist dazu ausgebildet, über den Signaleingang eine Information über die jeweilige Ware, zu welcher die Navigation erfolgen soll, zu erhalten. Es versteht sich, dass auch diese Vorrichtung durch die Merkmale der übrigen Offenbarung vorteilhaft weitergebildet werden kann.

Vorzugsweise ist die elektronische Steuereinrichtung dazu ausgebildet, für eine vorbestimmte Zeitspanne eine Information über ein Sonderangebot und/oder einen Rabatt durch eine Projektion auf einem Preisschild und/oder direkt auf einer Ware optisch erkennbar darzustellen. Dadurch können auf einfache Weise aktuelle, die Ware betreffende Informationen dargestellt werden. Dadurch kann auch ein Fehlerrisiko auf Grund veralteter, die Ware betreffender Informationen reduziert werden. Alternativ oder zusätzlich kann die elektronische Steuereinrichtung dazu ausgebildet sein, für eine vorbestimmte Zeitspanne durch eine Projektion eine jeweilige Ware optisch erkennbar hervorzuheben. Die Hervorhebung kann beispielsweise durch eine Projektion in Form eines auf die jeweilige Ware zeigenden Pfeils oder eines diese umgebenden Kreises erfolgen. Durch die Hervorhebung ermöglicht die Vorrichtung ein vereinfachtes und schnelles Auffinden der jeweiligen Ware. Insbesondere können Waren häufig genutzter Warentypen hervorgehoben werden. Die Vorrichtung kann eine elektronische Schnittstelle aufweisen und dazu ausgebildet sein, für die Projektion erforderliche Daten von einem externen Gerät, beispielsweise einer Speichereinrichtung, zu empfangen. Hierbei kann es sich beispielsweise um Daten handeln, die festlegen, zu welcher Ware die Projektion dargestellt werden soll und/oder die die Zeitspanne der Projektion vorbestimmen. Die Daten können ferner auch den Inhalt der Projektion, beispielsweise den Rabatt, betreffen. Es versteht sich, dass diese Ausführungen auch für sich als eine eigenständige Erfindung betrachtet werden können.

Die vorliegende Erfindung betrifft gemäß einem anderen Aspekt auch eine Vorrichtung für ein Logistikzentrum, insbesondere ein Industriewarenlager, mit einer Kameraanordnung zur Erfassung einer auf einer Ablagefläche abgelegten Vielzahl von Waren innerhalb des gesamten Sichtfelds der Kameraanordnung, einer Projektionseinrichtung zur Projektion von die Waren betreffenden Informationen, und einer elektronischen Steuereinrichtung, die mit der Kameraanordnung und der Projektionseinrichtung in Signalverbindung steht und dazu ausgebildet ist, mittels Bildanalyse die Waren einzeln zu erfassen, und für eine vorbestimmte Zeitspanne durch eine Projektion eine Information über ein Sonderangebot und/oder einen Rabatt auf einem Preisschild und/oder direkt auf einer Ware optisch erkennbar darzustellen und/oder durch eine Projektion eine jeweilige Ware optisch erkennbar hervorzuheben. Es versteht sich, dass auch diese Vorrichtung durch die Merkmale der übrigen Offenbarung vorteilhaft weitergebildet werden kann.

Die Erfindung betrifft gemäß einem weiteren Aspekt ein Verfahren für ein Logistikzentrum, insbesondere ein Industriewarenlager, zur Erfassung einer auf einer Ablagefläche abgelegten Vielzahl von Waren mittels einer Kameraanordnung innerhalb des gesamten Sichtfelds der Kameraanordnung und zur Projektion von die Erfassung betreffenden Informationen mittels einer Projektionseinrichtung. Bei dem Verfahren werden mittels Bildanalyse die Waren einzeln erfasst. Die Erfassung eines Aufnehmens einer jeweiligen Ware von der Ablagefläche und/oder eines Ablegens einer jeweiligen Ware auf die Ablagefläche wird durch eine Projektion optisch erkennbar dargestellt.

Die Bildanalyse kann grundsätzlich mittels der elektronischen Steuereinrichtung nach üblichen Verfahren erfolgen. Hierfür kann die elektronische Steuereinrichtung beispielsweise dazu ausgebildet sein, mittels Sensordatenfusion und Computer Vision in Verbindung mit künstlicher Intelligenz die Sensordaten der Kameraanordnung, der Kraftsensoranordnung und/oder des RFID-Lesegeräts zur Erfassung und/oder zur Erkennung zu verarbeiten.

Generell gelten die Ausführungen zu den erfindungsgemäßen Vorrichtungen für das erfindungsgemäße Verfahren entsprechend, dies gilt insbesondere hinsichtlich Ausführungsformen und Vorteilen. Zudem versteht es sich, dass sämtliche hierin genannten Merkmale miteinander kombinierbar sind, außer es ist explizit etwas Gegenteiliges angegeben.

Ferner versteht es sich, dass die erfindungsgemäße Vorrichtung sowie das Verfahren und deren Ausführungsformen rein beispielhaft für die Anwendung in einem Logistikzentrum erläutert werden. Ebenso denkbar ist deren Anwendung beispielsweise in einem Industriewarenlager, einer Fertigungsanlage oder einem, insbesondere kassenlosen, Supermarkt.

Die Erfindung wird im Folgenden beispielhaft unter Bezugnahme auf die Figuren beschrieben. Es zeigen als schematische Prinzipskizzen
- Fig. 1: eine erste erfindungsgemäße Vorrichtung,
- Fig. 2: eine zweite erfindungsgemäße Vorrichtung, und
- Fig. 3: eine dritte erfindungsgemäße Vorrichtung.

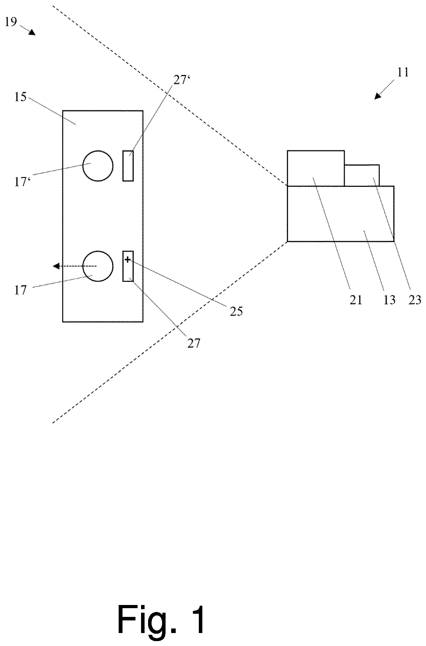

Fig. 1 zeigt eine schematische Prinzipskizze einer ersten erfindungsgemäßen Vorrichtung 11 für ein Logistikzentrum. Die Vorrichtung 11 umfasst eine Kameraanordnung 13 zur Erfassung einer auf einer Ablagefläche 15 eines Tischs abgelegten Vielzahl von Waren 17, 17' innerhalb des gesamten Sichtfelds 19 (illustriert durch die zwei gestrichelten Linien) der Kameraanordnung 13. Des Weiteren umfasst die Vorrichtung 11 eine Projektionseinrichtung 21 in Form eines Laserprojektors zur Projektion von die Erfassung betreffenden Informationen, und eine elektronische Steuereinrichtung 23. Die elektronische Steuereinrichtung 23 steht mit der Kameraanordnung 13 und dem Laserprojektor 21 in Signalverbindung. Die Signalverbindung kann grundsätzlich kabelgebunden und/oder drahtlos ausgeführt sein. Ferner ist die elektronische Steuereinrichtung 23 dazu ausgebildet, mittels Bildanalyse die Waren 17, 17' einzeln zu erfassen, und die Erfassung eines Aufnehmens einer jeweiligen Ware 17, 17` von der Ablagefläche 15 und eines Ablegens einer jeweiligen Ware 17, 17' auf die Ablagefläche 15 durch eine jeweilige Projektion 25 optisch erkennbar darzustellen.

Die Kameraanordnung 13 umfasst in der beispielhaft gezeigten Ausführungsform drei einzelne Kameras (nicht dargestellt). Die Anordnung und Anzahl der Kameras ist derart gewählt und realisiert, dass das gesamte Sichtfeld 19 der Kameraanordnung 13 den mit Hilfe der zwei gestrichelten Linien illustrierten Bereich und die Waren 17, 17' darin abdeckt. Der Laserprojektor 21 ist an einer der Kameras der Kameraanordnung 13 angeordnet und bildet mit dieser eine Einheit, wobei die Vorrichtung 11 an einer Gebäudedecke des Logistikzentrums fest installiert ist. Ferner ist der Laserprojektor 21 derart ausgerichtet und die elektronische Steuereinrichtung 23 dazu ausgebildet, die Projektion 25 auf einem jeweiligen Hinweisschild 27, 27' der Waren 17, 17' darzustellen.

Über die Kameraanordnung 13 werden die Waren 17, 17' von der elektronischen Steuereinrichtung 23 einzeln erfasst. Mit Hilfe des gestrichelten Pfeils ist beispielhaft ein Aufnehmen der Ware 17 von der Ablagefläche 15 durch eine nicht dargestellte Person illustriert. Auch das Aufnehmen der Ware 17 wird von der elektronischen Steuereinrichtung 23 erfasst. Die elektronische Steuereinrichtung 23 ist derart ausgebildet, dass sie hierbei mittels des Laserprojektors 21 die Projektion 25 in Form eines Plus-Zeichens für eine vordefinierte Zeitdauer von fünf Sekunden auf demjenigen Hinweisschild 27, 27` darstellt, von welchem die jeweilige Ware 17, 17' aufgenommen wird - in dem gezeigten Beispiels also auf dem Hinweisschild 27 der Ware 17. Die Darstellung des Plus-Zeichens 25 auf dem Hinweisschild 27 befindet sich dabei im direkten Blickfeld der Person beim Aufnehmen der Ware 17, wodurch die Person auf einfache Weise zuverlässig erkennen kann, ob das Aufnehmen korrekt oder fehlerhaft erfasst wurde. Würde hingegen beim Aufnehmen das Plus-Zeichen 25 nicht dargestellt, könnte die Person die fehlerhafte Erfassung unmittelbar erkennen und sofort Gegenmaßnahmen einleiten.

Die elektronische Steuereinrichtung 23 ist ferner derart ausgebildet, dass sie - für den in Fig. 1 nicht gezeigten Fall - wenn die Person die aufgenommene Ware 17 wieder auf der Ablagefläche 15 ablegt, bei der Erfassung des Ablegens mittels des Laserprojektors 21 die Projektion in Form eines Minus-Zeichens für die vordefinierte Zeitdauer von fünf Sekunden auf demjenigen Hinweisschild 27, 27' darstellt, zu welchem die Ware 17 abgelegt wird. Hierdurch befindet sich auch beim Ablegen die Darstellung des Minus-Zeichens im direkten Blickfeld der Person, sodass sie ebenfalls auf einfache Weise zuverlässig erkennen kann, ob das Ablegen korrekt oder fehlerhaft erfasst wurde.

Die Vorrichtung 11 kann außerdem eine an der Ablagefläche 15 angeordnete Kraftsensoranordnung (nicht dargestellt) aufweisen, mit welcher Kraftsensoranordnung die elektronische Steuereinrichtung 23 in Signalverbindung steht. Alternativ oder zusätzlich kann die Vorrichtung 11 auch ein RFID-Lesegerät (nicht dargestellt) umfassen, mit welchem RFID-Lesegerät die elektronische Steuereinrichtung 23 in Signalverbindung steht. Die elektronische Steuereinrichtung 23 kann dann dazu ausgebildet sein, auch mittels der Kraftsensoranordnung und/oder des RFID-Lesegeräts das Aufnehmen der jeweiligen Ware 17, 17' von der Ablagefläche 15 und/oder das Ablegen der jeweiligen Ware 17, 17' auf die Ablagefläche 15 zu erfassen.

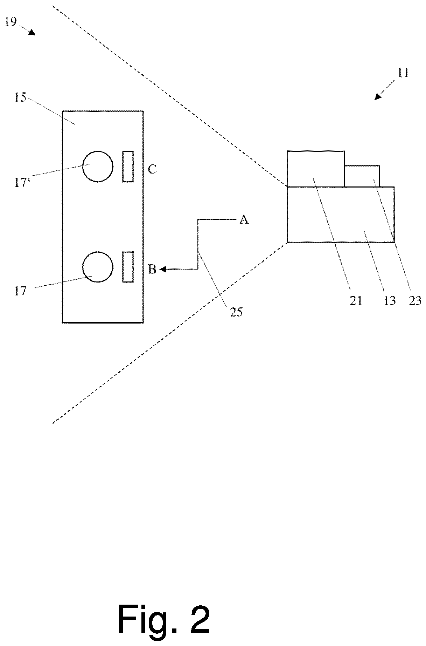

Fig. 2 zeigt eine schematische Prinzipskizze einer zweiten erfindungsgemäßen Vorrichtung 11, welche grundsätzlich wie die Vorrichtung 11 aus Fig. 1 ausgebildet sein kann. Die in Fig. 2 gezeigte Vorrichtung 11 umfasst eine Kameraanordnung 13 zur Erkennung einer Person innerhalb des gesamten Sichtfelds 19 der Kameraanordnung 13, eine Projektionseinrichtung 21 in Form eines Laserprojektors zur Projektion von die Erkennung betreffenden Informationen, und eine elektronische Steuereinrichtung 23. Die elektronische Steuereinrichtung 23 steht mit der Kameraanordnung 13 und der Projektionseinrichtung 21 in Signalverbindung und ist dazu ausgebildet, mittels Bildanalyse die Person zu erkennen. Die elektronische Steuereinrichtung 23 ist ferner dazu ausgebildet, durch eine Projektion 25 in Form eines Pfeils eine Navigation entlang eines Weges zu einer jeweiligen Ware 17, 17` einer auf einer Ablagefläche 15 abgelegten Vielzahl von Waren 17, 17' innerhalb des gesamten Sichtfelds 19 der Kameraanordnung 13 optisch erkennbar darzustellen. Außerdem weist die elektronische Steuereinrichtung 23 einen Signaleingang (nicht dargestellt) auf und ist dazu ausgebildet, über den Signaleingang eine Information über die jeweilige Ware 17, 17`, zu welcher die Navigation erfolgen soll, zu erhalten.

Beispielweise kann eine nicht dargestellte Person mittels einer Anwendung auf einem mobilen Endgerät (nicht dargestellt) die Ware 17, welche die Person aufsuchen möchte, auswählen. Die Information über die ausgewählte Ware 17 erhält die elektronische Steuereinrichtung 23 über den Signaleingang. Ferner ist die elektronische Steuereinrichtung 23 dazu ausgebildet sein, auf Informationen zuzugreifen, welche die jeweiligen Ablageorte B, C der innerhalb des gesamten Sichtfelds 19 vorhandenen Waren 17,17' betreffen. Diese Informationen können beispielsweise durch die elektronischen Steuereinrichtung 23 von einer externen Datenbank (nicht dargestellt) abgerufen werden.

Außerdem ist die elektronische Steuereinrichtung 23 dazu ausgebildet, die Person, welche beispielhaft die Ware 17 ausgewählt hat und zu dieser navigiert werden möchte, mittels der Kameraanordnung 13 zu erkennen und damit den momentanen Standort A der Person zu erkennen. Zusätzlich kann die elektronische Steuereinrichtung dazu ausgebildet sein, beispielsweise über eine GPS-Ortungsfunktion des mobilen Endgeräts dessen momentanen Standort und damit den Standort A der Person zu erkennen.

Mittels des Laserprojektors 21 kann die elektronische Steuereinrichtung 23 durch die Projektion des Pfeils 25 die Person entlang eines Weges zu der ausgewählten Ware 17 navigieren. Dabei kann die elektronische Steuereinrichtung 23 dazu ausgebildet sein, die Darstellung des Pfeils 25 über einen kontinuierlichen Abgleich des erkannten momentanen Standorts A der Person mit dem Ablageort B der Ware zu aktualisieren.

Die elektronische Steuereinrichtung 23 kann ferner dazu ausgebildet sein, die ausgewählte Ware 17 mittels des Laserprojektors 21 optisch erkennbar hervorzuheben, wenn als momentaner Standort A ein Standort vor der gesuchten Ware erkannt wird, d.h. wenn die Person den Ablageort B der gesuchten Ware 17 erreicht hat. Die Hervorhebung kann beispielsweise durch eine Projektion in Form eines auf die ausgewählte Ware 17 zeigenden Pfeils oder eines diese umgebenden Kreises erfolgen.

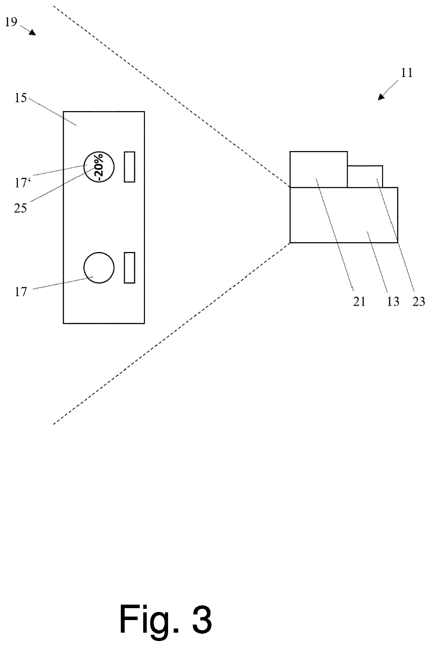

Fig. 3 zeigt eine schematische Prinzipskizze einer dritten erfindungsgemäßen Vorrichtung 11, welche grundsätzlich wie die Vorrichtung 11 aus Fig. 1 oder 2 ausgebildet sein kann. Die in Fig. 3 gezeigte Vorrichtung 11 umfasst eine Kameraanordnung 13 zur Erfassung einer auf einer Ablagefläche 15 abgelegten Vielzahl von Waren 17, 17' innerhalb des gesamten Sichtfelds 19 der Kameraanordnung 13, eine Projektionseinrichtung 21 in Form eines Videoprojektors zur Projektion von die Waren 17, 17' betreffenden Informationen, und eine elektronische Steuereinrichtung 23. Die elektronische Steuereinrichtung 23 steht mit der Kameraanordnung 13 und der Projektionseinrichtung 21 in Signalverbindung und ist dazu ausgebildet, mittels Bildanalyse die Waren 17, 17' einzeln zu erfassen. Die elektronische Steuereinrichtung 23 ist ferner dazu ausgebildet, für eine vorbestimmte Zeitspanne durch eine Projektion 25 eine Information über einen Rabatt direkt auf der jeweiligen Ware 17, 17' optisch erkennbar darzustellen.

Die Vorrichtung weist eine elektronische Schnittstelle (nicht dargestellt) auf und ist dazu ausgebildet, für die Projektion 25 erforderliche Daten von einer externen Speichereinrichtung zu empfangen. Die Daten legen in diesem Beispiel fest, dass die Projektion 25 einen Inhalt von "-20%" auf der Ware 17' für eine Zeitspanne von acht Stunden darstellen soll.

### Bezugszeichenliste

- 11: Vorrichtung
- 13: Kameraanordnung
- 15: Ablagefläche
- 17: Ware
- 17`: Ware
- 19: Sichtfeld
- 21: Projektionseinrichtung
- 23: Steuereinrichtung
- 25: Projektion
- 27: Hinweisschild
- 27': Hinweisschild

## Patentansprüche

1. Vorrichtung (11) für ein Logistikzentrum, insbesondere ein Industriewarenlager, mit
einer Kameraanordnung (13) zur Erfassung einer auf einer Ablagefläche (15) abgelegten Vielzahl von Waren (17, 17') innerhalb des gesamten Sichtfelds (19) der Kameraanordnung (13),
einer Projektionseinrichtung (21) zur Projektion von die Erfassung betreffenden Informationen, und
einer elektronischen Steuereinrichtung (23), die mit der Kameraanordnung (13) und der Projektionseinrichtung (21) in Signalverbindung steht und dazu ausgebildet ist, mittels Bildanalyse die Waren (17, 17') einzeln zu erfassen, und die Erfassung eines Aufnehmens einer jeweiligen Ware (17, 17') von der Ablagefläche (15) und/oder eines Ablegens einer jeweiligen Ware (17, 17') auf die Ablagefläche (15) durch eine Projektion (25) optisch erkennbar darzustellen.

2. Vorrichtung (11) nach Anspruch 1, wobei die Projektionseinrichtung (21) und/oder die elektronische Steuereinrichtung (23) dazu ausgebildet ist, die Projektion (25) auf einer für die Projektion (25) zugänglichen Oberfläche, vorzugsweise auf einem Hinweisschild (27, 27') oder Preisschild einer Ware, insbesondere der jeweiligen Ware (17, 17'), und/oder direkt auf der jeweiligen Ware (17, 17'), innerhalb des gesamten Sichtfelds (19) der Kameraanordnung (13) darzustellen.

3. Vorrichtung (11) nach Anspruch 1 oder 2, wobei die Projektion (25) ein Bild, ein Zeichen, ein Symbol und/oder eine Warenbezeichnung umfasst und/oder wobei die Projektion (25) farbcodiert ist.

4. Vorrichtung (11) nach einem der vorhergehenden Ansprüche, wobei die elektronische Steuereinrichtung (23) dazu ausgebildet ist, die Projektion (25) für eine vordefinierte Zeitdauer, vorzugsweise von drei Sekunden, darzustellen.

5. Vorrichtung (11) nach einem der vorhergehenden Ansprüche, wobei die Projektionseinrichtung (21) als ein Laserprojektor und/oder als ein Videoprojektor ausgeführt ist.

6. Vorrichtung (11) nach einem der vorhergehenden Ansprüche, wobei die Vorrichtung (11) eine an der Ablagefläche (15) angeordnete Kraftsensoranordnung aufweist und/oder ein RFID-Lesegerät umfasst, mit welcher Kraftsensoranordnung und/oder mit welchem RFID-Lesegerät die elektronische Steuereinrichtung (23) in Signalverbindung steht, und wobei die elektronische Steuereinrichtung (23) dazu ausgebildet ist, mittels der Kraftsensoranordnung und/oder des RFID-Lesegeräts das Aufnehmen der jeweiligen Ware (17, 17') von der Ablagefläche (15) und/oder das Ablegen der jeweiligen Ware (17, 17') auf die Ablagefläche (15) zu erfassen.

7. Vorrichtung (11) nach einem der vorhergehenden Ansprüche, wobei die Vorrichtung (11) als stationär angeordnete Vorrichtung (11) ausgebildet ist und/oder wobei die Projektionseinrichtung (21) an einer Kamera der Kameraanordnung (13) angeordnet ist, insbesondere als eine Einheit mit der Kamera ausgebildet ist.

8. Vorrichtung (11) nach einem der vorhergehenden Ansprüche, wobei die elektronische Steuereinrichtung (23) dazu ausgebildet ist, durch eine Projektion (25) eine Navigation entlang eines Weges zu einer jeweiligen Ware (17, 17') optisch erkennbar darzustellen, wobei die elektronische Steuereinrichtung (23) einen Signaleingang aufweist und dazu ausgebildet ist, über den Signaleingang eine Information über die jeweilige Ware (17, 17'), zu welcher die Navigation erfolgen soll, zu erhalten.

9. Vorrichtung (11) nach einem der vorhergehenden Ansprüche, wobei die elektronische Steuereinrichtung (23) dazu ausgebildet ist, für eine vorbestimmte Zeitspanne eine Information über ein Sonderangebot und/oder einen Rabatt durch eine Projektion (25) auf einem Hinweisschild (27, 27') oder einem Preisschild und/oder direkt auf einer Ware (17, 17') optisch erkennbar darzustellen und/oder durch eine Projektion (25) eine jeweilige Ware (17, 17') optisch erkennbar hervorzuheben.

10. Verfahren für ein Logistikzentrum, insbesondere ein Industriewarenlager, zur Erfassung einer auf einer Ablagefläche (15) abgelegten Vielzahl von Waren (17, 17') mittels einer Kameraanordnung (13) innerhalb des gesamten Sichtfelds (19) der Kameraanordnung (13) und zur Projektion von die Erfassung betreffenden Informationen mittels einer Projektionseinrichtung (21), wobei mittels Bildanalyse die Waren (17, 17') einzeln erfasst werden, und die Erfassung eines Aufnehmens einer jeweiligen Ware (17, 17') von der Ablagefläche (15) und/oder eines Ablegens einer jeweiligen Ware (17, 17') auf die Ablagefläche (15) durch eine Projektion (25) optisch erkennbar dargestellt wird.
